# EUROPEAN PATENT APPLICATION

(11) **EP 4 421 126 A1**
(43) Date of publication of application: **28.08.2024**
(21) Application number: 22883490.9
(22) Date of filing: 14.10.2022
(51) Int. Cl.: C08L 81/02, C08K 3/013, C08K 7/14, C08L 77/00

(54) **POLYARYLENE SULFIDE COMPOSITION AND METHOD FOR PRODUCING SAME**

(30) Priority: 19.10.2021 JP 2021170620; 19.10.2021 JP 2021170621; 19.10.2021 JP 2021170623
(71) Applicant: Tosoh Corporation, Yamaguchi 746-8501 (JP)
(72) Inventor: HARUNARI, Takeshi, Yokkaichi-shi Mie 510-8540 (JP); INOUE, Hiroki, Yokkaichi-shi Mie 510-8540 (JP)
(74) Representative: Vossius & Partner Patentanwälte Rechtsanwälte mbB
(86) International application number: PCT/JP2022/038326
(87) International publication number: WO 2023/068186

(57) **Abstract**

There are provided a polyarylene sulfide composition that contains a post-consumer recycled polyamide and a fibrous filler without compromising the intrinsic heat resistance, chemical resistance, flowability and other characteristics of a polyarylene sulfide and a method for producing it. The polyarylene sulfide composition comprises a polyarylene sulfide (A) having a melt viscosity of 100 to 3000 poises as measured under the conditions of a measuring temperature of 315°C and a load of 10 kg using a capillary rheometer flow tester fitted with a 1-mm diameter and 2-mm long die, 10 to 90 parts by weight of a post-consumer recycled polyamide (B) per 100 parts by weight of the polyarylene sulfide (A) and 20 to 110 parts by weight of a fibrous filler (C) per a total of 100 parts by weight of the polyarylene sulfide (A) and the post-consumer recycled polyamide (B).

## Description

### TECHNICAL FIELD

The present invention relates to a polyarylene sulfide composition. In particular, the present invention relates to a polyarylene sulfide composition that contains a post-consumer recycled polyamide, a material whose practical use is awaited, but, nevertheless, without compromising the intrinsic heat resistance, chemical resistance, flowability and other characteristics of a polyarylene sulfide and a method for producing it, as well as to a polyarylene sulfide composition that is superior in cold and hot impact resistance and, besides that, allows for the provision of a complex that exhibits excellent adhesion and airtightness even when combined with a metal component.

### BACKGROUND ART

Polyarylene sulfides (Hereinafter also abbreviated to PASs.), typified by poly(p-phenylene sulfide) (Hereinafter also abbreviated to PPS.), are resins that exhibit excellent characteristics, for example in heat resistance, chemical resistance and flowability. With their excellent characteristics, PASs are widely used in applications such as components of electric/electronic equipment, automotive components and components of office equipment.

In recent years, however, there has also been a growing demand for the use of recycled resins in components of electric/electronic equipment for purposes such as reducing emissions of plastics, primarily in Western countries. This trend is now extending to automotive and other components.

Among plastics, used fishing nets and ropes are improperly left in large quantities, constituting a major cause of marine pollution. Carpets and mats used in household, automotive or industrial applications, too, are mostly disposed of. Attempts to recycle polyamides (Also referred to as nylon.), materials used in many of such fishing nets, ropes, carpets and mats, have started. In general, recycled materials are roughly classified into post-consumer recycled materials (Hereinafter also abbreviated to PCRs.) and post-industrial recycled materials (Hereinafter also abbreviated to PIRs.). PCRs represent materials collected or recycled after products are used and disposed of by consumers, and PIRs represent materials resulting from the collection or recycling of waste generated during production processes, i.e., before products reach consumers. PCRs, furthermore, are nonuniform, for example in the degree of degradation during use, compared with PIRs, and it is highly difficult to produce/obtain uniform PCRs suitable for use. As a result, PCRs are costly, and their current utilization is limited to specific fields, such as plastic bottles. There is a need for further dissemination and utilization of PCRs.

For resin compositions containing a recycled material, furthermore, compositions such as the following have been proposed: a recycled resin composition for use in filament materials for fused deposition modeling 3D printers that contains a recycled resin (A) recycled from plastic packaging material and containing a polyolefin resin as a base constituent and an unfused substance in which the percentage of particles having a maximum size of 200 µm or more is 15% by number or less and a resin (B) whose melt flow rate measured at a temperature of 230°C and a load of 2.16 kg is 5 g/10 minutes or more (See, for example, Patent Document 1.); and a polycarbonate resin composition that contains (A) 40% to 80% by mass recycled aromatic polycarbonate resin, (B) 20% to 60% by mass aromatic polycarbonate resin, (C) 10 to 60 parts by mass of carbon fiber coated with a resin selected from polyamides, polyurethanes, and epoxy resins and not coated with nickel, (D) 10 to 20 parts by mass of a phosphate compound, (E) 0.01 to 1 part by mass of a fluorine compound and (F) 0.5 to 10 parts by mass of a polyorganosiloxane-containing graft copolymer, with the amounts of (C) to (F) being per a total of 100 parts by mass of (A) and (B), and is free from nickel-coated carbon fiber (See, for example, Patent Document 2.).

Moreover, for methods for producing a shaped article containing a recycled material, methods such as the following have been proposed: a method for producing a shaped article in which 20% to 80% by weight fibrous filler-reinforced crosslinked polyphenylene sulfide composition recycled pellets and 80% to 20% by weight fibrous filler-reinforced crosslinked polyphenylene sulfide composition non-recycled pellets are fed to an injection molding machine, and injection molding is performed (See, for example, Patent Document 3.).

Additionally, for methods for recycling nylon, methods such as the following have been proposed: a method for producing recycled nylon fiber that includes a step of providing nylon fiber waste that is oil-resistant nylon 6 fiber waste or oil-resistant nylon 66 fiber waste, a grinding step in which the nylon fiber waste is ground to form multiple pieces of nylon fiber debris, a washing step in which the pieces of nylon fiber debris are washed to reduce the oil content of the pieces of nylon fiber debris to 0.22 wt% or less, a dehydration and extrusion step in which water in the pieces of nylon fiber debris is removed to form multiple nylon films with a water content of 4 wt% or less, a melt granulation step in which the nylon films are melted and granulated to form multiple recycled nylon particles and a melt spinning step in which the recycled nylon particles are melt-spun to give the recycled nylon fiber (See, for example, Patent Document 4.).

Since PASs are inferior in cold and hot impact resistance when compared with other engineering plastics, furthermore, it has been proposed to blend a modified ethylene copolymer into a PAS as a technology for improving the cold and hot impact resistance of PASs (See, for example, Patent Documents 5 and 6.).

Moreover, the method of replacing part of metal with resin has been explored to make components of automobiles, aircraft and other transport equipment lighter. As a method for combining resin and metal into a one-piece complex, the method of directly combining them by inserting a metal component having a physically treated and/or chemically treated surface into a mold and shaping the resin by injection molding (Hereinafter also designated as insert injection molding.) has been attracting attention because of its good productivity in mass production, small number of components involved, low cost, high flexibility in designing and low environmental impact. This method has been proposed for, for example, production processes for mobile electronic devices, such as smartphones (See, for example, Patent Documents 7 to 9.).

### PRIOR ART DOCUMENTS

### PATENT DOCUMENTS

| | |
|---|---|
| Patent Document 1: | JP-A-2021-115795 |
| Patent Document 2: | Japanese Patent No. 6825890 |
| Patent Document 3: | Japanese Patent No. 5386853 |
| Patent Document 4: | Japanese Patent No. 6629943 |
| Patent Document 5: | JP-A-2008-144003 |
| Patent Document 6: | JP-A-2005-306926 |
| Patent Document 7: | Japanese Patent No. 5701414 |
| Patent Document 8: | Japanese Patent No. 5714193 |
| Patent Document 9: | Japanese Patent No. 4020957 |

### DISCLOSURE OF INVENTION

### TECHNICAL PROBLEM

For the resin compositions proposed in Patent Documents 1 and 2, however, there is no mention of superengineering plastics, let alone polyarylene sulfide resins, which are highly difficult to handle and utilize. In the method for producing a shaped article proposed in Patent Document 3, furthermore, recycled fibrous filler-reinforced polyphenylene sulfide composition pellets recycled from sprue material, runner material or unwanted copies of the shaped article produced during the injection molding, i.e., PIRs, are contained, and there is no proposal regarding PCRs, which pose difficulty in their reuse. Moreover, the production method proposed in Patent Document 4 is one that relates to a method for producing recycled nylon fiber and makes no proposal regarding a resin composition containing recycled nylon that can be reused as various shaped articles.

For the resin compositions proposed in Patent Documents 5 and 6, there is no mention of a resin composition containing recycled nylon. As for the method for producing a complex described in Patent Document 7, the complex structure described in Patent Document 8 and the laser processing method described in Patent Document 9, too, there is no mention of a resin composition containing recycled nylon.

An object of the present invention, therefore, is to provide a PAS composition that contains a PCR polyamide without compromising the intrinsic heat resistance, chemical resistance, flowability and other characteristics of a PAS and a method for producing it, along with a PAS composition that is superior in cold and hot impact resistance and, besides that, allows for the provision of a complex that exhibits excellent adhesion and airtightness even when combined with a metal component.

### SOLUTION TO PROBLEM

After extensive research to solve the above problem, the inventors found that a particular PAS composition containing a PCR polyamide is superior in heat resistance, chemical resistance and flowability. In addition to this, the inventors discovered that the PAS composition, when blended with a thermoplastic elastomer, can be superior in cold and hot impact resistance and can form a complex that exhibits excellent adhesion and airtightness even when combined with a metal component. Based on these findings, the inventors completed the present invention.

That is, the present invention lies in the following [1] to [10].
[1] A polyarylene sulfide composition comprising a polyarylene sulfide (A) having a melt viscosity of 100 to 3000 poises as measured under conditions of a measuring temperature of 315°C and a load of 10 kg using a capillary rheometer flow tester fitted with a 1-mm diameter and 2-mm long die, 10 to 90 parts by weight of a post-consumer recycled polyamide (B) per 100 parts by weight of the polyarylene sulfide (A) and 20 to 110 parts by weight of a fibrous filler (C) per a total of 100 parts by weight of the polyarylene sulfide (A) and the post-consumer recycled polyamide (B).
[2] The polyarylene sulfide composition according to [1], wherein the polyarylene sulfide (A) is a recycled polyarylene sulfide.
[3] The polyarylene sulfide composition according to [1] or [2], wherein the post-consumer recycled polyamide (B) is a post-consumer recycled polyamide obtained by collecting and/or recycling at least one member selected from a fishing net, a rope, a carpet and a mat.
[4] The polyarylene sulfide composition according to any one of [1] to [3], further containing at least one compatibilizer (D) selected from an isocyanurate, an epoxy resin and a silane coupling agent and/or at least one release agent (E) selected from the group consisting of polyethylene wax, polypropylene wax and a fatty acid amide wax.
[5] The polyarylene sulfide composition according to any one of [1] to [4], further containing a nonfibrous filler (F).
[6] The polyarylene sulfide composition according to any one of [1] to [5], wherein the polyarylene sulfide (A) is a polyarylene sulfide having a melt viscosity of 100 to 2000 poises, the fibrous filler (C) is glass fiber, and the polyarylene sulfide composition further contains a thermoplastic elastomer (G).
[7] A method for producing the polyarylene sulfide composition as defined in any one of [1] to [6], the method comprising, with a twin-screw extruder having screws with a ratio (L/D) of screw length (L) to screw diameter (D) of 30 or greater and two or more kneading zones, melting and kneading at least the polyarylene sulfide (A), the post-consumer recycled polyamide (B) and the fibrous filler (C) under kneading conditions of a kneading-zone cylinder temperature of 280°C to 330°C, a screw peripheral speed of 50 mm/second to 400 mm/second and a dwell time of 30 seconds to 100 seconds and extruding resulting melt.
[8] Pellets formed from the polyarylene sulfide composition as defined in any one of [1] to [6], wherein the pellets have a columnar shape with a diameter of 0.5 to 2.5 mm and a length of 1.5 to 4 mm or a spherical shape with a diameter of 1 to 3 mm.
[9] The pellets according to [8], wherein the pellets have a light brown or brown color.
[10] The pellets according to [8] or [9], wherein the pellets are cold-cut pellets.

### ADVANTAGEOUS EFFECTS OF INVENTION

According to the present invention, there can be provided a PAS composition containing a PCR polyamide. This PAS composition is superior in impact resistance, mechanical strength, heat resistance, chemical resistance, moisture resistance and flowability and even cold and hot impact resistance and bondability with metal and is particularly useful in, for example, electric/electronic component, automotive component or wet-area applications. Its industrial value is extremely high.

### BRIEF DESCRIPTION OF DRAWINGS

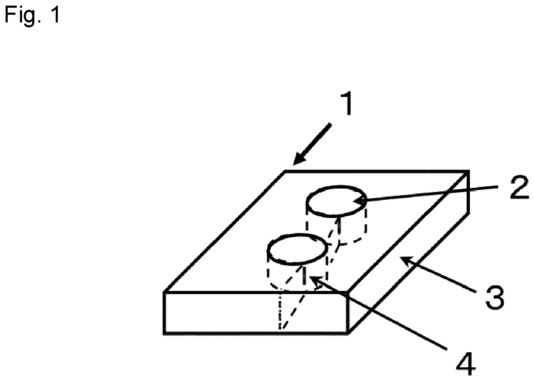

[Fig. 1]; A schematic view of an insert test specimen used in the Examples.

### DESCRIPTION OF EMBODIMENTS

The present invention will now be described in detail.

The PAS (A) comprised in a PAS composition according to the present invention only needs to be one that belongs to the category commonly referred to as PASs. An example of the PAS is a homopolymer or copolymer formed by p-phenylene sulfide units, m-phenylene sulfide units, o-phenylene sulfide units, phenylene sulfide sulfone units, phenylene sulfide ketone units, phenylene sulfide ether units and/or biphenylene sulfide units. Specific examples of the PAS include PPS, polyphenylene sulfide sulfone, polyphenylene sulfide ketone and polyphenylene sulfide ether. Of these, it is particularly preferred that the PAS be PPS because this makes the PAS composition especially superior in heat resistance and strength properties.

The PAS (A), furthermore, is one having a melt viscosity of 100 to 3000 poises as measured under the conditions of a measuring temperature of 315°C and a load of 10 kg using a capillary rheometer flow tester fitted with a 1-mm diameter and 2-mm long die. When the PAS (A) is one having a melt viscosity of less than 100 poises, the resulting composition is inferior in mechanical strength. When the PAS (A) is one having a melt viscosity exceeding 3000 poises, however, the resulting composition is inferior in flowability.

As for the method for producing the PAS (A), it can be produced by a method known as a production method for a PAS. For example, the PAS (A) can be obtained by polymerizing an alkali metal sulfide salt and a polyhalogenated aromatic compound together in a polar solvent. Examples of polar organic solvents in that case include N-methyl-2-pyrrolidone, N-ethyl-2-pyrrolidone, cyclohexylpyrrolidone, dimethylformamide and dimethylacetamide, and examples of alkali metal sulfide salts include anhydrides or hydrates of sodium sulfide, rubidium sulfide and lithium sulfide. The alkali metal sulfide salt, furthermore, may be a product of reaction between an alkali metal hydrosulfide salt and an alkali metal hydroxide. Examples of polyhalogenated aromatic compounds include p-dichlorobenzene, p-dibromobenzene, p-diiodobenzene, m-dichlorobenzene, m-dibromobenzene, m-diiodobenzene, 4,4'-dichlorodiphenyl sulfone, 4,4'-dichlorobenzophenone, 4,4'-dichlorodiphenyl ether and 4,4'-dichlorodibiphenyl.

Moreover, the PAS (A) may be a linear-chain one, one polymerized with the addition of a small amount of a trihalogenated compound or polyhalogenated compound with more halogen atoms to have some introduced crosslink or branch structures, one derived by modifying part and/or an end of the molecular chain of a PAS with a functional group such as a carboxyl group, metal carboxylate salt, amino group, alkyl group, alkoxy group or nitro group or one that has undergone heating treatment in a nonoxidative inert gas, such as nitrogen, or may even be a mixture of such structures. The PAS (A), furthermore, may be one in which impurities, such as sodium atoms, oligomers of the PAS, sodium chloride and sodium salts of 4-(N-methyl-chlorophenylamino)butanoates, have been decreased by performing deionizing treatment (e.g., acid washing or hot-water washing) or washing treatment with an organic solvent, such as acetone or methyl alcohol, before or after curing by heating. In addition, the PAS (A) may be one that has been cured by performing heating treatment in an inert gas or oxidative gas after the end of the polymerization reaction.

Let alone a PAS obtained by the production method described above, or a PAS referred to as a virgin resin, the PAS (A) may be a recycled PAS that is a PCR PAS, which is a PAS collected or recycled after a product is used and disposed of by consumers, or a PIR PAS from sprue material, runner material, unwanted copies during shaping or defectively shaped articles produced in the manufacturing process of a product. Of these, it is particularly preferred that the PAS (A) be a PIR PAS, which has undergone a relatively lesser degree of degradation.

The PCR polyamide (B) comprised in the PAS composition according to the present invention only needs to be a polyamide collected or recycled after a product is used and disposed of by consumers. Examples of the polyamide include homopolyamides, such as polytetramethylene sebacamide (nylon 410), polypentamethylene sebacamide (nylon 510), polycaproamide (nylon 6), polyhexamethylene adipamide (nylon 66), polyhexamethylene sebacamide (nylon 610), polyhexamethylene dodecanamide (nylon 612), polydecamethylene sebacamide (nylon 1010), polydodecanamide (nylon 12), polyundecanamide (nylon 11), polyhexamethylene terephthalamide (nylon 6T), polyxylylene adipamide (nylon XD6), polynonamethylene terephthalamide (nylon 9T) and polydecamethylene terephthalamide (nylon 10T) or copolymeric polyamides that are copolymers of these homopolyamides (nylon 6/66, nylon 6/10, nylon 6/66/610, 66/6T and 66/10T), and, furthermore, the PCR polyamide (B) may be a mixture of such polyamides.

The PCR polyamide (B), furthermore, is preferably a PCR polyamide obtained by collecting and/or recycling fishing nets, ropes, carpets or mats. This is because from fishing nets, ropes, carpets or mats, polyamides in the same structure, of the same grade and, in some cases, of the same lot can be recycled, and thus PCR polyamides with reduced variability in quality can be obtained. As a result, the use of such a PCR polyamide makes it possible to obtain a PAS composition with reduced variability in quality.

The amount of the PCR polyamide (B) blended is from 10 to 90 parts by weight per 100 parts by weight of the PAS (A). When the PCR polyamide (B) constitutes less than 10 parts by weight, the percentage of recycled material used is low, making the reuse of the material less meaningful. When the amount of the PCR polyamide (B) exceeds 90 parts by weight, however, the resulting composition is inferior in wet heat resistance, flowability, heat resistance, chemical resistance and color.

The fibrous filler (C) comprised in the PAS composition according to the present invention is a component that improves the chemical strength of the PAS composition. Examples include glass fiber; carbon fibers, such as PAN carbon fibers and pitch-based carbon fibers; graphitized fibers; whiskers, such as silicon nitride whiskers, basic magnesium sulfate whiskers, barium titanate whiskers, potassium titanate whiskers, silicon carbide whiskers, boron whiskers and zinc oxide whiskers; metal fibers, such as stainless-steel fiber; inorganic fibers, such as rockwool, zirconia, alumina silica, barium titanate, silicon carbide, alumina, silica and blast furnace slag; organic fibers, such as all-aromatic polyamide fiber, phenolic resin fiber and all-aromatic polyester fiber; and mineral fibers, such as wollastonite and magnesium oxysulfate, and it is preferred that the fibrous filler (C) be glass fiber because this makes the PAS composition particularly superior in mechanical strength and impact resistance. The glass fiber may be anything commonly referred to as glass fiber. Specific examples of the glass fiber include glass fibers such as chopped strands having an average fiber diameter of 6 to 14 µm, chopped strands formed by flat glass fibers having a fiber cross-sectional aspect ratio of 2 to 4, milled fibers and rovings; silane fibers; aluminosilicate glass fibers; hollow glass fibers; and nonhollow glass fibers. Of these, it is particularly preferred that the glass fiber be chopped strands having an average fiber diameter of 6 to 14 µm or chopped strands formed by flat glass fibers having a fiber cross-sectional aspect ratio of 2 to 4 because this makes the PAS composition especially superior in mechanical strength, impact resistance and flowability. It is also possible to use two or more of such fibrous fillers in combination, and a glass fiber that has undergone surface treatment in advance with an epoxy compound, isocyanate compound, silane compound, titanate compound or other functional compound or polymer may optionally be used. As for the amount of the fibrous filler (C) blended, the fibrous filler (C) constitutes 20 to 110 parts by weight per a total of 100 parts by weight of the PAS (A) and the PCR polyamide (B) because this makes the PAS composition superior in the balance between toughness, mechanical strength and flowability. When the fibrous filler constitutes less than 20 parts by weight, the resulting composition is inferior in impact resistance. When the amount of the fibrous filler exceeds 110 parts by weight, however, the composition is inferior in flowability.

Preferably, the PAS composition according to the present invention further comprises a compatibilizer (D) because it makes the PAS composition particularly superior in mechanical strength and impact resistance. Examples of compatibilizers in that case include an isocyanurate, an epoxy resin, a silane coupling agent and a mixture of them.

The isocyanurate, furthermore, only needs to be a compound referred to as an isocyanurate. Of such compounds, it is particularly preferred that the isocyanurate be an aliphatic isocyanurate because this reduces the likelihood of the PAS composition to cause mold fouling. Specific examples of the aliphatic isocyanurate include 1,3,5-tris(6-isocyanatohexa-1-yl)-1,3,5-triazin-2,4,6(1H,3H,5H)-trione, 1,3,5-tris(6-isocyanatotetra-1-yl)-1,3,5-triazin-2,4,6(1H,3H,5H)-trione and 1,3,5-tris(6-isocyanatododeca-1-yl)-1,3,5-triazin-2,4,6(1H,3H,5H)-trione, and an aliphatic isocyanurate having a molecular weight of 500 or more is preferred because it markedly reduces the likelihood of the PAS composition to cause mold fouling. The aliphatic isocyanurate may be a multimer, such as the dimer or trimer, or may be an isocyanurate composed of the isocyanurate monomer and multimers, such as the dimer and trimer, included in it. It is preferred that the aliphatic isocyanurate be one in which the percentage of isocyanate groups is 20% or more because it is superior in reactivity with PASs and PCR polyamides and makes the PAS composition superior in impact resistance.

The aliphatic isocyanurate, furthermore, may be an aliphatic isocyanate that has partially been modified with an alcohol, such as 1,3-butanediol or 2,2,4-trimethyl-1,3-pentanediol. Of such aliphatic isocyanurates, it is particularly preferred that the aliphatic isocyanurate be 1,3,5-tris(6-isocyanatohexa-1-yl)-1,3,5-triazin-2,4,6(1H,3H,5H)-trione because it is superior in resistance to cold and hot environments and is easily available. Specific examples of 1,3,5-tris(6-isocyanatohexa-1-yl)-1,3,5-triazin-2,4,6(1H,3H,5H)-trione include (trade name) CORONATE HXR (manufactured by Tosoh Corporation) and (trade name) DURANATE TPA-100 (manufactured by Asahi Kasei Corporation).

Moreover, the epoxy resin may be anything that belongs to the category referred to as epoxy resins. Specific examples include epoxy resins containing glycidyl groups, such as glycidyl ether epoxy resins, which are synthesized from, for example, a compound containing two or more hydroxyl groups in its molecule, such as 2,2-bis(4'-hydroxyphenyl)propane (bisphenol A), bis(2-hydroxyphenyl)methane (bisphenol F), 4,4'-dihydroxydiphenylsulfone (bisphenol S), 4,4'-dihydroxybiphenyl, resorcin, saligenin, trihydroxydiphenyldimethylmethane, tetraphenylol ethane, their halogenated derivative or alkylated derivative, butanediol, ethylene glycol, erythritol, a novolak, glycerol or a polyoxyalkylene, and epichlorohydrin; glycidyl ester epoxy resins, which are synthesized from, for example, a compound containing two or more hydroxyl groups in its molecule as described above and glycidyl phthalate; and glycidyl amine epoxy resins, which are synthesized from, for example, a primary amine or secondary amine, such as aniline, diaminodiphenylmethane, meta-xylylenediamine or 1,3-bisaminomethylcyclohexane, and epichlorohydrin and epoxy resins containing no glycidyl groups, such as epoxidized soybean oil, epoxidized polyolefins, vinylcyclohexene dioxide and dicyclopentadiene dioxide. Of these, bisphenol epoxy resins, such as glycidyl ether epoxy resins and glycidyl ester epoxy resins made with bisphenol A, bisphenol F, bisphenol S or other bisphenols, are particularly preferred because they contribute to superb impact resistance of the resulting PAS composition. More preferred epoxy resins are bisphenol-A epoxy resins.

The silane coupling agent, furthermore, may be anything that belongs to the category referred to as silane coupling agents. Of such compounds, it is particularly preferred that the silane coupling agent be a silane coupling agent or agents that are a trialkoxysilane coupling agent having a glycidyl group and/or a trialkoxysilane coupling agent having an amino group because this makes the PAS composition especially superior in impact resistance and mechanical strength. The silane coupling agents in that case are not particularly limited as long as they are trialkoxysilane coupling agent having a glycidyl group or amino group. Specific examples of silane coupling agents that belong to this category include 3-glycidoxypropylmethyldimethoxysilane, 3-glycidoxypropyltrimethoxysilane, 3-glycidoxypropylmethyldiethoxysilane, 3-glycidoxypropyltriethoxysilane, 3-aminopropyltrimethoxysilane, 3-aminopropyltriethoxysilane, N-phenyl-3-aminopropyltrimethoxysilane, N-2-(aminoethyl)-3-aminopropylmethyldimethoxysilane and N-2-(aminoethyl)-3-aminopropyltrimethoxysilane.

As for the amount of the compatibilizer (D) blended, it is preferred that the amount be from 0.1 to 15 parts by weight per 100 parts by weight of the PAS because this ensures that a PAS composition superior in impact resistance and mechanical strength and unlikely to cause mold fouling will be obtained.

The PAS composition according to the present invention, furthermore, may comprise a release agent (E) for improved mold releasability and appearance when made into a shaped article. Examples of materials that are suitable for use as the release agent (E) include polyethylene wax, polypropylene wax and a fatty acid amide wax. The polyethylene wax and polypropylene wax can be common ones that are commercially available. The fatty acid amide wax is a polycondensate formed by a higher aliphatic monocarboxylic acid, a polybasic acid and a diamine and can be anything that belongs to this category. An example is (trade name) Light Amide WH-255 (manufactured by Kyoeisha Chemical Co., Ltd.), which is a polycondensate formed by stearic acid, sebacic acid and ethylenediamine.

The PAS composition according to the present invention is preferably one that comprises a nonfibrous filler (F) because it makes the composition superior in dimensional accuracy and rigidity. Examples of the nonfibrous filler include calcium carbonate, lithium carbonate, magnesium carbonate, zinc carbonate, mica, silica, talc, clay, calcium sulfate, kaolin, wollastonite, zeolite, silicon oxide, magnesium oxide, zirconium oxide, tin oxide, magnesium silicate, calcium silicate, calcium phosphate, magnesium phosphate, hydrotalcite, glass powder, glass bubbles and glass flakes, and it is preferred that the nonfibrous filler be calcium carbonate or glass flakes because this makes the PAS composition particularly superior in dimensional accuracy and rigidity. It is, furthermore, preferred that the nonfibrous filler be calcium carbonate or glass flakes having an average particle size of 2 to 800 µm because this makes the PAS composition particularly superior in mechanical strength, impact resistance and flowability. As for the amount of the nonfibrous filler (F) blended, it is preferred that the total amount of the fibrous filler (C) and the nonfibrous filler (F) be an amount equivalent to 30 to 220 parts by weight per a total of 100 parts by weight of the PAS (A) and the PCR amide (B) because this makes the composition superior in the balance between rigidity, dimensional accuracy and flowability.

The PAS composition according to the present invention, furthermore, is preferably one that comprises a thermoplastic elastomer (G) because it makes the composition superior in bondability with metal components and airtightness. The thermoplastic elastomer may be anything that is commonly referred to as a thermoplastic elastomer; it may be a thermoplastic elastomer having a reactive functional group or may be a thermoplastic elastomer having no reactive functional group or may even be a mixture of the thermoplastic elastomer having a reactive functional group and the thermoplastic elastomer having no reactive functional group. Examples of the reactive functional group include an epoxy group, a maleic anhydride group, a carboxylic acid group, an amino group and an isocyanate group, and examples of the thermoplastic elastomer having a reactive group include modified ethylene copolymers, such as ethylene-α,β-unsaturated alkyl carboxylate-maleic anhydride copolymers, ethylene-α,β-unsaturated glycidyl carboxylate copolymers, ethylene-α,β-unsaturated glycidyl carboxylate-vinyl acetate copolymers, ethylene-α,β-unsaturated glycidyl carboxylate-α,β-unsaturated alkyl carboxylate copolymers and maleic anhydride-grafted ethylene-α-olefin copolymers, and hydrogenated forms of vinyl aromatic compound-based block copolymers, such as hydrogenated styrene-butadienestyrene block copolymers modified with maleic anhydride or its derivative, hydrogenated styrene-butadiene block copolymers modified with maleic anhydride or its derivative, hydrogenated styrene-isoprene block copolymers modified with maleic anhydride or its derivative and hydrogenated styrene-isoprene-styrene block copolymers modified with maleic anhydride or its derivative. Materials such as polyurethane-based thermoplastic elastomers, polyester-based thermoplastic elastomers, polyamide-based thermoplastic elastomers, acrylonitrile-butadiene rubber-based thermoplastic elastomers, ethylene-propylene copolymers and ethylene-propylene-diene copolymers are also examples of thermoplastic elastomers that can be used, as long as they have a functional group that can react with PAS. Of these, modified ethylene copolymers are preferred because they make the PAS composition particularly superior in toughness.

As for thermoplastic elastomers having no reactive functional group, examples include variations of the thermoplastic elastomers listed above having no functional group. Of such elastomers, it is particularly preferred that the thermoplastic elastomer (G) be an olefin-acrylate binary copolymer because this ensures that a PAS composition especially superior in the balance between flowability and toughness will be obtained. Examples of olefins in that case, furthermore, include ethylene or α-olefins having three or more carbon atoms, and examples of acrylates include methyl acrylate, ethyl acrylate, n-propyl acrylate, isopropyl acrylate, n-butyl acrylate, t-butyl acrylate and isobutyl acrylate.

As for the amount of the thermoplastic elastomer (G) blended, it is preferred that the amount be from 1 to 50 parts by weight per a total of 100 parts by weight of the PAS (A) and the PCR polyamide (B) because this makes the PAS composition superior in the balance between toughness, bondability with metal and flowability.

The PAS (A), furthermore, is preferably a PAS having a melt viscosity of 100 to 2000 poises, and the fibrous filler (C) is preferably glass fiber, because these make the PAS composition superior in the balance between toughness, bondability with metal and flowability and even in resistance to cold and hot environments.

The PAS composition according to the present invention can be used with various additives mixed therein unless the composition deviates from the object of the present invention. For example, the PAS composition may be one that contains one or more of ordinary additives known in the related art, including plasticizers, such as polyalkylene oxide oligomer compounds, thioether compounds, ester compounds and organic phosphorus compounds; antioxidants; heat stabilizers; anti-ultraviolet agents; foaming agent; and pigments, such as carbon black. Moreover, the PAS composition may be one made with one or more of various thermosetting resins; or thermoplastic resins, such as cyanate resins, phenolic resins, polyimides, silicone resins, polyesters, polyphenylene oxides, polycarbonates, polysulfones, polyether imides, polyether sulfones, polyether ketones, polyether ether ketones, polyamide-imides and polyalkylene oxides, mixed in it.

The method for producing the PAS composition according to the present invention can be a hot-melt kneading method that is used in the related art. An example is a hot-melt kneading method with equipment such as a single-screw or twin-screw extruder, a kneader, a mill or a Brabender machine, and a hot-melt kneading method with a twin-screw extruder, which is particularly superior in kneading performance, is preferred. The screws used in the twin-screw extruder in that case preferably have two or more kneading zones. It is, furthermore, preferred that the screws be ones having a ratio (L/D) of screw length (L) to screw diameter (D) of 30 or greater, in particular 40 or greater, because this leads to sufficient compatibility between the PAS (A) and the PCR polyamide (B) and, as a result, makes the PAS composition superior in toughness, such as impact resistance.

Moreover, it is preferred to set the cylinder temperature at the kneading zones of the extruder to 280°C to 330°C, and it is particularly preferred to set this cylinder temperature to 290°C to 320°C, because these lead to sufficient compatibility between the PAS (A) and the PCR polyamide (B) and, at the same time, facilitate the control of thermal decomposition of the PCR polyamide (B). The peripheral speed of the screws, furthermore, is preferably from 50 to 400 mm/second, particularly preferably from 150 to 300 mm/second, because these lead to good dispersion and partitioning of the PCR polyamide in the PAS phase within the PAS composition and, as a result, make the PAS composition superior in toughness, such as impact resistance. Additionally, the dwell time of molten resin inside the extruder is preferably from 30 seconds to 100 seconds, particularly preferably 30 seconds to 80 seconds, because these ensure an adequate duration for the melting and kneading of the PAS (A) and the PCR polyamide (B) and, at the same time, facilitate the control of thermal decomposition of the polyamide (B).

The PAS composition that has undergone melt kneading can then be pelletized, for example by the method of hot-cutting, mist-cutting or otherwise cutting the extruded molten blend or the method of cold-cutting a strand. It is preferred that the pelletizing method be cold cutting, in which the molten blend is cooled by a method such as water cooling or air cooling to give a strand, and this strand is cut into pellets, or hot cutting because this allows pellets superior in quality and color to be efficiently obtained in a consistent manner. As for the pellets in that case, it is preferred that they be pellets having a columnar shape with a diameter of 0.5 to 2.5 mm and a length of 1.5 to 4 mm or spherical pellets having a diameter of 1 to 3 mm because this makes the pellets superior in workability when shaped into various articles by injection molding. In particular, it is preferred that the pellets be ones having a light brown or brown color because this allows shaped articles superior in product appearance to be obtained.

The PAS composition according to the present invention can be made into a shaped article having any shape using equipment such as an injection molding machine, extrusion molding machine, transfer molding machine, compression molding machine or blow molding machine.

The PAS composition according to the present invention, furthermore, is suitable for use as an insert-molded article or metal component-PAS composition component complex superior in cold and hot impact resistance and bondability with metal. The metal component-PAS composition component complex can be obtained by shaping the PAS composition on a metal component by insert injection molding. The insert injection molding is preferably by the method of placing a metal component having a roughened surface into the mold, injecting the PAS composition in its molten state into the metal component to form a PAS composition component, and directly combining the metal component and the PAS composition component into a one-piece complex because this method is particularly superior in bondability and productivity.

An example of a temperature at which the PAS composition is melted in that case is from 280°C to 340°C. As for the molding machine when insert molding is performed, it is preferred to perform insert injection molding by using an injection molding machine because it is particularly superior in productivity. In particular, the mold temperature when insert molding is performed is preferably 130°C or above, particularly preferably from 140°C to 160°C, because this allows a metal component-PAS composition component complex superior in bonding to be produced efficiently. The mold hold pressure, furthermore, is preferably 1 MPa or more, particularly preferably 30 MPa or more and 100 MPa or less.

An example of a method for roughening the surface of the metal component is the method of physically treating and/or chemically treating the surface. Examples of physical treatments include the method of bringing fine solid particles into contact or collision with the surface and the method of irradiating the surface with high-energy electromagnetic radiation. More specific examples include sandblasting treatment, liquid honing treatment and laser machining treatment. Examples of abrasives in the case of sandblasting treatment or liquid honing treatment include sand, steel grit, steel shot, cut wires, alumina, silicon carbide, metal slag, glass beads and plastic beads. Examples of laser machining treatments include ones by the methods proposed in International Publication No. WO 2007/072603 and JP-A-2015-142960.

As for chemical treatment, examples include anodizing treatment and the method of chemically treating the surface with an aqueous solution of an acid or alkali. The anodizing treatment may be by the method of, for example, forming an oxide coating on the surface of the metal component by carrying out electrolysis in an electrolytic solution with the metal component as an anode and can be performed using the process commonly known as anodization in fields such as plating. More specific examples include 1) DC electrolysis, in which electrolysis is performed with an applied constant DC voltage, and 2) bipolar electrolysis, in which electrolysis is performed by applying a voltage that is a superposition of an AC component on a DC component. Specific examples of anodization processes include methods proposed in, for example, International Publication No. WO 2004/055248. The method of chemically treating the surface with an aqueous solution of an acid or alkali may be, for example, the method of chemically treating the surface of the metal component by immersing the metal component in the aqueous solution of an acid or alkali. As for the aqueous solution of an acid or alkali in that case, an example is the method of chemically treating the surface with a phosphoric acid compound, such as phosphoric acid; a chromic acid compound, such as chromic acid; a hydrofluoric acid compound, such as hydrofluoric acid; a nitric acid compound, such as nitric acid; a hydrochloric acid compound, such as hydrochloric acid; a sulfuric acid compound, such as sulfuric acid; an alkali aqueous solution, such as a sodium hydroxide or ammonia aqueous solution; or a triazine thiol aqueous solution or triazine thiol derivative aqueous solution. More specific examples include methods proposed in, for example, JP-A-2017-132243, JP-A-2019-188651, International Publication No. WO 2008/133296, Japanese Patent No. 5622785, JP-A-10-096088, JP-A-10-056263, JP-A-04-032585, JP-A-04-032583, JP-A-02-298284, International Publication No. WO 2009/151099 and International Publication No. WO 2011/104944.

In addition, the metal component may be a component made of any material as long as it belongs to the category of metal components. Of such metal components, ones that are aluminum components, aluminum alloy components, copper components, copper alloy components, magnesium components, magnesium alloy components, iron components, titanium components, titanium alloy components or stainless-steel components are particularly preferred because they can be used in various applications after being made into a complex with a PAS composition component. In particular, ones that are aluminum components, aluminum alloy components, magnesium components, magnesium alloy components, titanium components or titanium alloy components, superior in weight reduction, are preferred. More preferably, the metal component is an aluminum component or aluminum alloy component. The metal component, furthermore, may be a rolled, drawn or extruded material, typically a plate, may be a cast material, typically a die-cast material, or may be a metal component that is a forged material.

The PAS composition according to the present invention is one that contains a PCR polyamide without compromising the intrinsic heat resistance, chemical resistance, flowability and other characteristics of a PAS and is suitable for use in applications such as electric/electronic components and automotive components or wet-area applications, such as piping/fittings.

### EXAMPLES

The present invention will now be specifically described with examples. The present invention, however, is by no means limited to these.

The PASs (A), PCR polyamides (B), fibrous fillers (C), compatibilizers (D), release agent (E), nonfibrous fillers (F) and thermoplastic elastomers (G) used in the Examples and Comparative Examples are presented below.

### <PASs (A)>

Poly(p-phenylene sulfide) (Hereinafter denoted as PPS (A-1).): melt viscosity, 470 poises.

Poly(p-phenylene sulfide) (Hereinafter denoted as PPS (A-2).): melt viscosity, 820 poises.

Poly(p-phenylene sulfide) (Hereinafter denoted as PPS (A-3).): melt viscosity, 1580 poises.

Poly(p-phenylene sulfide) (Hereinafter denoted as PPS (A-4).): melt viscosity, 3220 poises.

Poly(p-phenylene sulfide) (Hereinafter denoted as PPS (A-5).): melt viscosity, 80 poises.

### <PCR Polyamides (B)>

A PCR polyamide (Hereinafter denoted as PCR (B-1).); manufactured by Refinverse, Inc., (trade name) RA6G00, a polyamide 6 resin recycled from used fishing nets.

A PCR polyamide (Hereinafter denoted as PCR (B-2).); manufactured by Refinverse, Inc., (trade name) RA6R00, a polyamide 6 resin recycled from used fishing nets.

### <Polyamide (B')>

Polyamide 6 (B'); manufactured by Ube Industries Ltd., (trade name) 1013B.

### <Fibrous Fillers (C)>

Glass fiber (C-1); manufactured by Nippon Electric Glass Co., Ltd., (trade name) T-760H; fiber diameter, 10 µm; fiber length, 3 mm.

Glass fiber (C-2); chopped strands manufactured by Nitto Boseki Co., Ltd., (trade name) CSG-3PA 830; fiber cross-sectional aspect ratio, 4.

### <Compatibilizers (D)>

A trialkoxysilane coupling agent having a glycidyl group (D-1); manufactured by Shin-Etsu Chemical Co., Ltd., (trade name) KBM-403; 3-glycidoxypropyltrimethoxysilane.

An isocyanurate (D-2); manufactured by Tosoh Corporation, (trade name) CORONATE HXR (isocyanate content, 21.8%; molecular weight, 504).

An epoxy resin (D-3); manufactured by Mitsubishi Chemical Corporation, (trade name) 1004.

### <Release Agent (E)>

A release agent (E-1); manufactured by Kyoeisha Chemical Co., Ltd., (trade name) Light Amide WH-255.

### <Nonfibrous Fillers (F)>

Calcium carbonate (F-1); manufactured by Shiraishi Kogyo Kaisha, Ltd., (trade name) WHITON P-30; average particle size, 6 µm.

Glass flakes (F-2); manufactured by Nippon Sheet Glass Co., Ltd., (trade name) REFG-301; average particle size, 160 µm.

### <Thermoplastic Elastomers (G)>

An ethylene-α,β-unsaturated alkyl carboxylate-maleic anhydride copolymer (G-1) (Hereinafter simply denoted as thermoplastic elastomer (G-1).): manufactured by SK global chemical co., Itd., (trade name) BONDINE AX8390, ethylene residue units:α,β-unsaturated alkyl carboxylate residue units:maleic anhydride residue units (ratio by weight) = 69.7:29:1.3.

An ethylene-α,β-unsaturated glycidyl carboxylate-α,β-unsaturated alkyl carboxylate copolymer (G-2) (Hereinafter simply denoted as thermoplastic elastomer (G-2).): manufactured by SK global chemical co., ltd., (trade name) LOTADER AX8700, ethylene residue units:α,β-unsaturated glycidyl carboxylate residue units:α,β-unsaturated alkyl carboxylate residue units (ratio by weight) = 67:8:25.

### SYNTHESIS EXAMPLE 1

A 50-liter autoclave equipped with a stirrer was loaded with 6214 g of Na₂S·2.9H₂O and 17000 g of N-methyl-2-pyrrolidone, and 1355 g of water was distilled away by gradually increasing the temperature to 205°C with stirring under a stream of nitrogen. After this system was cooled to 140°C, 7168 g of p-dichlorobenzene, 12 g of 3,5-dichloroaniline and 5000 g of N-methyl-2-pyrrolidone were added, and the system was sealed under a stream of nitrogen. The temperature of this system was increased to 225°C over 2 hours, the monomers were allowed to polymerize for 2 hours at 225°C, then the temperature was increased to 250°C over 30 minutes, and polymerization was performed for 3 hours at 250°C. After the end of polymerization, the system was cooled to room temperature, and solids were isolated using a centrifuge. The solids were washed with hot water at 180°C and dried at 100°C for one whole day, giving PPS.

The resulting PPS was dried at 240°C for 4 hours under reduced pressure conditions created with a vacuum drying oven, yielding a linear, amino-containing PPS (Hereinafter denoted as PPS (A-1).). The melt viscosity of PPS (A-1) was 470 poises.

### SYNTHESIS EXAMPLE 2

A 50-liter autoclave equipped with a stirrer was loaded with 6214 g of Na₂S·2.9H₂O and 17000 g of N-methyl-2-pyrrolidone, and 1355 g of water was distilled away by gradually increasing the temperature to 205°C with stirring under a stream of nitrogen. After this system was cooled to 140°C, 7180 g of p-dichlorobenzene, 6 g of 3,5-dichloroaniline and 5000 g of N-methyl-2-pyrrolidone were added, and the system was sealed under a stream of nitrogen. The temperature of this system was increased to 225°C over 2 hours, the monomers were allowed to polymerize for 2 hours at 225°C, then the temperature was increased to 250°C over 30 minutes, and polymerization was performed for 3 hours at 250°C. After the end of polymerization, the system was cooled to room temperature, and solids were isolated using a centrifuge. The solids were washed with hot water at 180°C and dried at 100°C for one whole day, giving PPS.

The resulting PPS was dried at 240°C for 6 hours under reduced pressure conditions created with a vacuum drying oven, yielding a linear, amino-containing PPS (Hereinafter denoted as PPS (A-2).). The melt viscosity of PPS (A-2) was 820 poises.

### SYNTHESIS EXAMPLE 3

PPS was obtained by the same polymerization method as in Synthesis Example 1, except that no 3,5-dichloroaniline was used.

The resulting PPS was cured at 250°C for 3 hours in an air atmosphere, yielding a branched PPS (Hereinafter denoted as PPS (A-3).). The melt viscosity of PPS (A-3) was 1580 poises.

### SYNTHESIS EXAMPLE 4

PPS was obtained by the same polymerization method as in Synthesis Example 2, except that no 3,5-dichloroaniline was used.

The resulting PPS was cured at 250°C for 6 hours in an air atmosphere, yielding a branched PPS (Hereinafter denoted as PPS (A-4).). The melt viscosity of PPS (A-4) was 3220 poises.

### SYNTHESIS EXAMPLE 5

A 15-liter autoclave equipped with a stirrer was loaded with 1814 g of Na₂S·2.9H₂O, 8.7 g of particulate sodium hydroxide (100% NaOH: Wako Special Grade) and 3232 g of N-methyl-2-pyrrolidone, and 339 g of water was distilled away by gradually increasing the temperature to 200°C with stirring under a stream of nitrogen. After this system was cooled to 190°C, 2085 g of p-dichlorobenzene and 1783 g of N-methyl-2-pyrrolidone were added, and the system was sealed under a stream of nitrogen. The temperature of this system was increased to 225°C over 2 hours, the monomers were allowed to polymerize for 1 hour at 225°C, then the temperature was increased to 250°C over 25 minutes, and polymerization was performed for 2 hours at 250°C. After the end of polymerization, the system was cooled to room temperature, and solids were isolated using a centrifuge. The solids were washed with hot water at 180°C and dried at 105°C for one whole day, giving PPS.

The resulting PPS was dried at 240°C for 6 hours under reduced pressure conditions created with a vacuum drying oven, yielding a linear PPS (Hereinafter denoted as PPS (A-5).). The melt viscosity of PPS (A-5) was 80 poises.

Evaluation/Measurement methods for the resulting PAS compositions are presented below.

### -Measurement of the Melt Viscosity of the PAS-

The measurement of melt viscosity was performed using a capillary rheometer flow tester (manufactured by Shimadzu Corporation, (trade name) CFT-500) fitted with a 1-mm diameter and 2-mm long die under the conditions of a measuring temperature of 315°C and a load of 10 kg.

### -Measurement of the Charpy (Notched) Impact Strength of the PAS Composition-

A test specimen was prepared using an injection molding machine (manufactured by Sumitomo Heavy Industries, Ltd., (trade name) SE-75S), and measurement was performed according to ISO 179-1. Compositions with a Charpy impact strength of 6 kJ/m² or more were defined as superior in impact resistance.

### -Measurement of the Flowability of the PAS Composition-

An injection molding machine (manufactured by Sumitomo Heavy Industries, Ltd., (trade name) SE-75S) was fitted with a mold having a 1-mm thick and 10-mm wide spirally carved groove, and then the PAS composition was introduced into the hopper of the injection molding machine and injected, with the cylinder temperature set to 310°C, injection pressure set to 190 MPa, injection speed set to maximum, injection time set to 1.5 seconds and mold temperature set to 135°C. Then the length over which the molten composition flowed in the spiral groove within the mold was measured as molding flowability. Compositions with a molding flowability exceeding 70 mm were considered superior in flowability.

### -Evaluation of the Wet Heat Resistance of the PAS Composition-

A tensile test specimen was prepared using an injection molding machine (manufactured by Sumitomo Heavy Industries, Ltd., (trade name) SE-75S), and the measurement of tensile strength was performed according to ISO 527-1 and -2. The tensile test specimen obtained through the foregoing, furthermore, was placed in a constant temperature and humidity chamber (manufactured by Hitachi Global Life Solutions, Inc., (trade name) EC46-HHP) maintained at 85°C and 85% humidity. After 2000 hours passed, the test specimen was removed, and the measurement of tensile strength was performed according to ISO 527-1 and -2. Compositions with a proportion (percentage) of the tensile strength measured after 2000 hours in the constant temperature and humidity chamber to the tensile strength measured without placement in the constant temperature and humidity chamber of 75% or more were defined as superior in wet heat resistance.

### -Evaluation of the Color of the PAS Composition-

A flat sheet measuring 70 mm wide × 70 mm long × 1 mm thick was prepared using an injection molding machine (manufactured by Sumitomo Heavy Industries, Ltd., (trade name) SE-75S), and its appearance was observed visually. Compositions with a light brown or brown sheet color were defined as superior in color, and those with a black or deep green sheet color were defined as inferior in color.

### -Measurement of the Flexural Modulus of the PAS Composition-

A test specimen was prepared using an injection molding machine (manufactured by Sumitomo Heavy Industries, Ltd., (trade name) SE-75S), and measurement was performed according to ISO 178. Compositions with a flexural modulus of 15 kJ/m² or more were defined as superior in rigidity.

### -Measurement of the Molding Shrinkage of the PAS Composition-

Using an injection molding machine (manufactured by Sumitomo Heavy Industries, Ltd., (trade name) SE-75S), a test specimen measuring 2 mm in thickness, 70 mm in width and 70 mm in length was prepared by performing injection molding at a cylinder temperature of 310°C and a mold temperature of 135°C. Subsequently, the molded test specimen was placed in a constant temperature chamber adjusted to 23°C × 50%Rh for 24 hr, and then its dimensions in the MD direction and TD direction were measured. After that, molding shrinkage, = (mold dimension/measured dimension of the test specimen)/mold dimension (percentage), was determined. Compositions with a mold shrinkage of less than 0.8% were considered superior in dimensional accuracy.

### -Measurement of Cold and Hot Impact Resistance-

Using an injection molding machine (manufactured by Sumitomo Heavy Industries, Ltd., (trade name) SE-75S), ten test pieces for the evaluation of cold and hot impact resistance, coated with a 1-mm thick layer of the PAS composition, were prepared by performing insert molding at a cylinder temperature of 310°C and a mold temperature of 140°C. In the molding process, a 30 mm × 20 mm × 10 mm rectangular steel block (carbon steel) as illustrated in Fig. 1 was inserted. The resulting ten test pieces were subjected to cooling and heating cycles, with each cycle consisting of holding at 150°C for 30 minutes, cooling to -40°C and holding for 30 minutes and heating again to 150°C. The cycles were continued until a visually noticeable crack developed, and the number of cooling and heating cycles performed until crack development was visually observed in six out of the ten test pieces was evaluated as cold and hot impact resistance. Compositions with more than 100 cooling and heating cycles performed were considered superior in cold and hot impact resistance.

### -Evaluation of Bondability between the Resin Component and the Metal Component-

A metal plate having a surface-treated surface was placed into the mold of an injection molding machine, and the PAS composition was introduced into the hopper of the injection molding machine (manufactured by Sumitomo Heavy Industries, Ltd., (trade name) SE 75S). By performing insert injection molding, a shear tensile test specimen with a bonding area of 50 mm² was obtained. Subsequently, using this shear tensile test specimen, the bonding strength of the bonding interface was measured and evaluated based on shear tensile strength according to ISO 19095. Compositions with a bonding strength of 30 MPa or more were considered superior in bondability.

### EXAMPLE 1

100 parts by weight of PPS (A-1), obtained in Synthesis Example 1, was uniformly mixed with 70 parts by weight of PCR (B-1) in advance. The resulting mixture was introduced into the hopper of a twin-screw extruder having four kneading zones (manufactured by The Japan Steel Works, Ltd., (trade name) TEX-25αIII, L/D = 55). Separately, glass fiber (C-1) was introduced through the hopper of a side feeder of the twin-screw extruder in such a manner that the amount of the glass fiber would be 70 parts by weight per a total of 100 parts by weight of PPS (A-1) and PCR (B-1). The materials were melted and kneaded together at a raw-material feeding speed of 25 kg/hr and a screw frequency of 200 rpm (peripheral speed: 258 mm/second) under the conditions of the cylinder temperature at the kneading zones increased to 300°C. After a dwell time of 50 seconds, a molten PAS composition flowing out through the die was cooled with water to form a strand, and this strand was then cut into pellets, yielding pellets having a light brown color in a columnar shape measuring 1.5 mm in diameter and 2.5 mm in length. In this manner, a PAS composition was prepared.

Then the resulting PAS composition was introduced into an injection molding machine (manufactured by Sumitomo Heavy Industries, Ltd., (trade name) SE 75S) heated to a cylinder temperature of 300°C and a mold temperature of 140°C, and the measurement of the molding flow length of the PAS composition was performed. Subsequently, using test specimens prepared by injection molding, evaluations for Charpy impact strength, color and wet heat resistance were conducted. The results from the individual measurements and evaluations are presented in Table 1.

### EXAMPLES 2 to 10

Pellet-shaped PAS compositions were prepared by the same method as in Example 1, with the blending proportions between the PPS (A), PCR polyamide (B), fibrous filler (C), compatibilizer (D) and release agent (E) set according to the conditions specified in Table 1. Then the compositions were evaluated by the same method as in Example 1. The evaluation results are presented in Table 1.

All obtained PAS compositions were superior in impact resistance, flowability, wet heat resistance and color.

**[Table 1]**

| | | | Example | | | | | | | | | |
|---|---|---|---|---|---|---|---|---|---|---|---|---|
| | | Unit | 1 | 2 | 3 | 4 | 5 | 6 | 7 | 8 | 9 | 10 |
| Formula | Polyarylene sulfide (A) | Parts by weight | | | | | | | | | | |
| | PPS (A-1) | | 100 | | | 100 | 100 | | | | 100 | |
| | PPS (A-2) | | | 100 | | | | | 100 | 100 | | 100 |
| | PPS (A-3) | | | | 100 | | | 100 | | | | |
| | PCR polyamide resin (B) | | | | | | | | | | | |
| | PCR (B-1) | | 70 | 50 | 20 | | 40 | | | | 70 | |
| | PCR (B-2) | | | | | 30 | | 30 | 20 | 40 | | 40 |
| | Fibrous filler (C) | | | | | | | | | | | |
| | Glass fiber (C-1) | | 119 | 90 | | 60 | | | 50 | 70 | 80 | 60 |
| | Glass fiber (C-2) | | | | 70 | | 110 | 120 | | | | |
| | C×100/(A+B) | | 70 | 60 | 58 | 46 | 79 | 92 | 42 | 50 | 47 | 43 |
| | Compatibilizer (D) | | | | | | | | | | | |
| | Silane coupling agent (D-1) | | | | | | | | | 0.5 | | |
| | Isocyanurate (D-2) | | | | | | | | | | 0.7 | |
| | Epoxy resin (D-3) | | | | | | | | | | | 5.0 |
| | Release agent (E) | | | | | | | | | | | |
| | Release agent (E-1) | | | | | | | | | | 0.5 | |
| Evaluations | Charpy impact strength | kJ/m² | 8.0 | 9.5 | 8.5 | 8.5 | 8.0 | 9.5 | 9.0 | 10.0 | 10.0 | 9.5 |
| | Molding flow length | mm | 200 | 220 | 190 | 210 | 180 | 210 | 200 | 180 | 170 | 210 |
| | Wet heat resistance | % | 80 | 83 | 87 | 84 | 80 | 82 | 84 | 85 | 85 | 86 |
| | Pellet diameter | mm | 1.5 | 1.5 | 1.7 | 1.5 | 1.8 | 1.5 | 1.5 | 1.8 | 1.9 | 1.5 |
| | Pellet length | mm | 2.5 | 2.8 | 2.4 | 2.5 | 2.3 | 2.5 | 2.5 | 2.3 | 2.3 | 2.6 |
| | Pellet color | - | Light brown | Light brown | Brown | Light brown | Light brown | Brown | Light brown | Light brown | Brown | Light brown |
| | Test specimen color | - | Brown | Light brown | Brown | Light brown | Brown | Brown | Light brown | Light brown | Brown | Light brown |

### COMPARATIVE EXAMPLES 1 to 5 and REFERENCE EXAMPLE 1

Pellet-shaped resin compositions were prepared by the same method as in Example 1, with the blending proportions between the PPS (A), PCR polyamide (B) or polyamide (B') and fibrous filler (C) set according to the conditions specified in Table 2. Then the compositions were evaluated by the same method as in Example 1. The evaluation results are presented in Table 2.

The resin composition obtained from Comparative Example 2 was inferior in impact resistance. The resin compositions obtained from Comparative Examples 1, 4 and 5 were inferior in wet heat resistance. The pellets and a test specimen obtained through Comparative Example 1 and test specimens obtained from Comparative Examples 3, 4 and 5 were inferior in color.

**[Table 2]**

| | | | Comparative Example | | | | | Reference Example 1 |
|---|---|---|---|---|---|---|---|---|
| | | Unit | 1 | 2 | 3 | 4 | 5 | |
| Formula | Polyarylene sulfide (A) | Parts by weight | | | | | | |
| | PPS (A-1) | | 100 | 100 | 100 | | | 100 |
| | PPS (A-4) | | | | | | | |
| | PPS (A-5) | | | | | 100 | 100 | |
| | PCR polyamide resin (B) | | | | | | | |
| | PCR (B-1) | | 100 | 8 | 80 | 50 | 70 | |
| | Polyamide resin (B') | | | | | | | 100 |
| | Fibrous filler (C) | | | | | | | |
| | Glass fiber (C-1) | | 140 | 25 | 30 | 90 | 180 | 140 |
| | ((C)×100)/((A)+(B)) | | 70 | 23 | 17 | 60 | 106 | 70 |
| Evaluations | Charpy impact strength | kJ/m² | 8.5 | 5.0 | 6.0 | 6.5 | 6.5 | 9.0 |
| | Molding flow length | mm | 120 | 240 | 220 | 300 | 260 | 120 |
| | Wet heat resistance | % | 70 | 88 | 88 | 73 | 73 | 73 |
| | Pellet diameter | mm | 1.7 | 1.5 | 1.5 | 1.3 | 1.4 | 1.8 |
| | Pellet length | mm | 2.2 | 3.2 | 2.8 | 3.3 | 3.2 | 2.3 |
| | Pellet color | - | Black | Light brown | Brown | Light brown | Brown | Light brown |
| | Test specimen color | - | Black | Brown | Black | Deep green | Black | Brown |

### EXAMPLE 11

100 parts by weight of PPS (A-1), obtained in Synthesis Example 1, was uniformly mixed with 35 parts by weight of PCR (B-1) and 130 parts by weight of calcium carbonate (F-1) in advance. The resulting mixture was introduced into the hopper of a twin-screw extruder having four kneading zones (manufactured by The Japan Steel Works, Ltd., (trade name) TEX-25αIII, LID = 55). Separately, glass fiber (C-1) was introduced through the hopper of a side feeder of the twin-screw extruder in such a manner that the amount of the glass fiber would be 100 parts by weight per 100 parts by weight of PPS (A-1). The materials were melted and kneaded together at a raw-material feeding speed of 25 kg/hr and a screw frequency of 200 rpm (peripheral speed: 258 mm/second) under the conditions of the cylinder temperature at the kneading zones increased to 320°C. After a dwell time of 50 seconds, a molten composition flowing out through the die was cooled with water to form a strand, and this strand was then cut into pellets, yielding pellets having a light brown color in a columnar shape measuring 1.7 mm in diameter and 2.0 mm in length. In this manner, a PAS composition was prepared.

Then the resulting PAS composition was introduced into an injection molding machine (manufactured by Sumitomo Heavy Industries, Ltd., (trade name) SE 75S) heated to a cylinder temperature of 310°C and a mold temperature of 140°C, and the measurement of the molding flow length of the PAS composition was performed. Subsequently, using test specimens prepared by injection molding, measurements for flexural modulus and percentage changes in dimensions and evaluations for color and wet heat resistance were conducted. The results from the individual measurements and evaluations are presented in Table 3.

### EXAMPLES 12 to 20

Pellet-shaped PAS compositions were prepared by the same method as in Example 11, with the blending proportions between the PPS (A), PCR polyamide (B), fibrous filler (C), nonfibrous filler (F), compatibilizer (D) and release agent (E) set according to the conditions specified in Table 3. Then the compositions were evaluated by the same method as in Example 11. The evaluation results are presented in Table 3.

All obtained PAS compositions were superior in rigidity, dimensional accuracy, wet heat resistance, flowability and color.

**[Table 3]**

| | | | Example | | | | | | | | | |
|---|---|---|---|---|---|---|---|---|---|---|---|---|
| | | Unit | 11 | 12 | 13 | 14 | 15 | 16 | 17 | 18 | 19 | 20 |
| Formula | Polyarylene sulfide (A) | Parts by weight | | | | | | | | | | |
| | PPS (A-1) | | 100 | | | | 100 | | 100 | 100 | 100 | 100 |
| | PPS (A-2) | | | 100 | | | | 100 | | | | |
| | PPS (A-3) | | | | 100 | 100 | | | | | | |
| | PCR polyamide resin (B) | | | | | | | | | | | |
| | PCR (B-1) | | 35 | 25 | | 33 | 65 | 50 | 25 | 80 | | 35 |
| | PCR (B-2) | | | | 25 | | | | | | 50 | |
| | Fibrous filler (C) | | | | | | | | | | | |
| | Glass fiber (C-1) | | 135 | 100 | | | 100 | 75 | 50 | 100 | 75 | 100 |
| | Glass fiber (C-2) | | | | 100 | 43 | | | | | | |
| | Nonfibrous filler (F) | | 130 | 25 | | 150 | 65 | 25 | 75 | | 50 | 80 |
| | Calcium carbonate (F-1) | | | | | | | | | | | |
| | Glass flakes (F-2) | | | | 25 | | | | | 33 | | |
| | Compatibilizer (D) | | | | | | | | | | | |
| | Silane coupling agent (D-1) | | | | | | | | | 0.5 | | |
| | Isocyanurate (D-2) | | | | | | | | | | 1.0 | |
| | Epoxy resin (D-3) | | | | | | | | | | | |
| | Release agent (E) | | | | | | | | | | | |
| | Release agent (E-1) | | | | | | | | | 0.5 | 0.5 | 8.0 |
| | (C*100)/(A+B) | | 100.0 | 80.0 | 80.0 | 32.0 | 61.0 | 50.0 | 40.0 | 56.0 | 50.0 | 74.0 |
| | (C+F)*100/(A+B) | | 196 | 100 | 100 | 145 | 100 | 67 | 100 | 74 | 83 | 133 |
| Evaluations | Flexural modulus | GPa | 19 | 16 | 16 | 19 | 18 | 16 | 18 | 16 | 17 | 16 |
| | Percentage change in dimension (MD direction) | % | 0.3 | 0.3 | 0.3 | 0.3 | 0.3 | 0.3 | 0.3 | 0.2 | 0.3 | 0.3 |
| | Percentage change in dimension (TD direction) | % | 0.5 | 0.6 | 0.5 | 0.5 | 0.6 | 0.6 | 0.5 | 0.4 | 0.6 | 0.6 |
| | Wet heat resistance | % | 84 | 86 | 86 | 88 | 77 | 83 | 86 | 78 | 83 | 85 |
| | Molding flow length | mm | 110 | 120 | 90 | 145 | 120 | 110 | 130 | 100 | 110 | 120 |
| | Pellet diameter | mm | 1.6 | 1.5 | 1.6 | 1.4 | 1.5 | 1.6 | 1.5 | 1.6 | 1.6 | 1.4 |
| | Pellet length | mm | 2.2 | 2.2 | 2.0 | 2.5 | 2.2 | 2.2 | 2.3 | 2.2 | 2.3 | 2.3 |
| | Pellet color | - | Light brown | Light brown | Brown | Brown | Light brown | Light brown | Light brown | Brown | Light brown | Light brown |
| | Test specimen color | - | Light brown | Brown | Brown | Brown | Light brown | Light brown | Light brown | Brown | Brown | Light brown |

### COMPARATIVE EXAMPLES 6 to 13 and REFERENCE EXAMPLE 2

Pellet-shaped resin compositions were prepared by the same method as in Example 11, with the blending proportions between the PPS (A), PCR polyamide (B) or polyamide (B'), fibrous filler (C) and nonfibrous filler (F) set according to the conditions specified in Table 4. Then the compositions were evaluated by the same method as in Example 11. The evaluation results are presented in Table 4.

The resin compositions obtained from Comparative Examples 8, 9, 10, 11 and 13 were inferior in rigidity. The resin compositions obtained from Comparative Examples 7, 9 and 11 were inferior in dimensional accuracy. The resin composition obtained from Comparative Example 6 was inferior in het heat resistance. The resin compositions obtained from Comparative Examples 6, 7, 10 and 12 were inferior in flowability. Test specimens obtained from Comparative Examples 6, 9 and 11 were inferior in color.

**[Table 4]**

| | | | Comparative Example | | | | | | | | |
|---|---|---|---|---|---|---|---|---|---|---|---|
| | | Unit | 6 | 7 | 8 | 9 | 10 | 11 | 12 | 13 | Reference Example 2 |
| Formula | Polyarylene sulfide (A) | Parts by weight | | | | | | | | | |
| | PPS (A-1) | | 100 | 100 | 100 | 100 | 100 | 100 | | | 100 |
| | PPS (A-4) | | | | | | | | 100 | | |
| | PPS (A-5) | | | | | | | | | 100 | |
| | PCR polyamide resin (B) | | | | | | | | | | |
| | PCR (B-1) | | 100 | 70 | 50 | 100 | 20 | 80 | 35 | 35 | |
| | Polyamide resin (B') | | | | | | | | | | 100 |
| | Fibrous filler (C) | | | | | | | | | | |
| | Glass fiber (C-1) | | 150 | 200 | 20 | 160 | 160 | 30 | 130 | 130 | 150 |
| | Nonfibrous filler (F) | | | | | | | | | | |
| | Calcium carbonate (F-2) | | 50 | 20 | 100 | 0 | 120 | 20 | 100 | 100 | 50 |
| | C*100/(A+B) | | 75 | 118 | 13 | 80 | 133 | 17 | 96 | 96 | 75 |
| | (C+F)*100)/(A+B) | | 100 | 129 | 80 | 80 | 233 | 28 | 170 | 170 | 100.0 |
| Evaluations | Flexural modulus | GPa | 18 | 16 | 13 | 14 | 14 | 12 | 19 | 10 | 18 |
| | Percentage change in dimension (MD direction) | % | 0.3 | 0.3 | 0.3 | 0.3 | 0.2 | 0.4 | 0.3 | 0.3 | 0.3 |
| | Percentage change in dimension (TD direction) | % | 0.5 | 0.9 | 0.6 | 0.9 | 0.4 | 0.9 | 0.4 | 0.6 | 0.5 |
| | Wet heat resistance | % | 70 | 77 | 83 | 78 | 76 | 83 | 84 | 76 | 72 |
| | Molding flow length | mm | 60 | 60 | 120 | 110 | 50 | 180 | 40 | 150 | 74 |
| | Pellet diameter | mm | 1.7 | 1.7 | 1.5 | 1.5 | 1.8 | 1.4 | 1.8 | 1.5 | 1.7 |
| | Pellet length | mm | 2.0 | 2.0 | 2.2 | 2.2 | 2.0 | 2.6 | 2.1 | 2.5 | 2.1 |
| | Pellet color | - | Black | Light brown | Light brown | Brown | Light brown | Brown | Brown | Light brown | Light brown |
| | Test specimen color | - | Black | Light brown | Light brown | Black | Light brown | Deep green | Brown | Brown | Light brown |

### EXAMPLE 21

An aluminum alloy (A5052) plate (50 mm × 10 mm × 1 mm thick) was immersed for 5 minutes in a degreasing bath with an aqueous solution containing 7.5% degreasing agent for aluminum (solution temperature, 60°C) in it and then washed with deionized water. Subsequently, the plate was immersed for 1 minute in a bath with an aqueous solution containing 1.5% sodium hydroxide (solution temperature, 40°C) in it, washed with deionized water, then immersed for 1 minute in a bath with a 3% concentration aqueous solution of nitric acid (solution temperature, 40°C) in it and washed with deionized water. Afterward, the plate was immersed for 1 minute in a bath with an aqueous solution containing 3.5% hydrazine hydrate (solution temperature, 60°C) in it, washed with deionized water, then immersed for 3 minutes in a bath with an aqueous solution containing 0.5% hydrazine hydrate (solution temperature, 33°C) in it, washed with deionized water and then dried in a warm-air drying oven, yielding a surface-roughened aluminum alloy (A5052) plate.

100 parts by weight of PPS (A-1), obtained in Synthesis Example 1, was uniformly mixed with 30 parts by weight of PCR (B-1) and 15 parts by weight of thermoplastic elastomer (G-1) in advance. The resulting mixture was introduced into the hopper of a twin-screw extruder having four kneading zones (manufactured by The Japan Steel Works, Ltd., (trade name) TEX-25αIII, LID = 55). Separately, glass fiber (C-1) was introduced through the hopper of a side feeder of the twin-screw extruder in such a manner that the amount of the glass fiber would be 40 parts by weight per 100 parts by weight of PPS (A-1). The materials were melted and kneaded together at a raw-material feeding speed of 25 kg/hr and a screw frequency of 200 rpm (peripheral speed: 258 mm/second) under the conditions of the cylinder temperature at the kneading zones increased to 310°C. After a dwell time of 50 seconds, a molten composition flowing out through the die was cooled with water to form a strand, and this strand was then cut. In this manner, a pellet-shaped PAS composition having a light brown color in a columnar shape measuring 1.7 mm in diameter and 2.3 mm in length was prepared.

Then the resulting PAS composition was introduced into an injection molding machine (manufactured by Sumitomo Heavy Industries, Ltd., (trade name) SE 75S) heated to a cylinder temperature of 310°C and a mold temperature of 140°C, and the measurement of the molding flow length of the PAS composition was performed. The surface-roughened aluminum alloy plate, furthermore, was placed into a mold, and insert molding of the PAS composition was performed to give an aluminum alloy component-PAS composition component complex that was a shear tensile test specimen with a bonding area of 50 mm². Then, using test specimens prepared by injection molding and insert injection molding, evaluations for cold and hot impact resistance and wet heat resistance and a measurement for bonding strength were conducted. In addition, color was examined with a test specimen. The results from the individual measurements and evaluations are presented in Table 5.

### EXAMPLES 22 to 29

Pellet-shaped PAS compositions were prepared by the same method as in Example 21, with the blending proportions between the PPS (A), PCR polyamide (B), glass fiber (C), thermoplastic elastomer (G), compatibilizer (D) and release agent (E) set according to the conditions specified in Table 5. The resulting PAS compositions were ones having a light brown or brown color. Then metal component-PAS composition component complexes were created, and their evaluation was performed, by the same method as in Example 21. The evaluation results are presented in Table 5.

All obtained PAS compositions were superior in cold and hot impact resistance, bondability with metal, wet heat resistance, flowability and color.

**[Table 5]**

| | | | Example | | | | | | | | |
|---|---|---|---|---|---|---|---|---|---|---|---|
| | | Unit | 21 | 22 | 23 | 24 | 25 | 26 | 27 | 28 | 29 |
| Formula | Polyarylene sulfide (A) | Parts by weight | | | | | | | | | |
| | PPS (A-1) | | 100 | 100 | | 100 | | 100 | 100 | 100 | |
| | PPS (A-2) | | | | | | 100 | | | | 100 |
| | PPS (A-3) | | | | 100 | | | | | | |
| | PCR polyamide resin (B) | | | | | | | | | | |
| | PCR (B-1) | | 30 | | 20 | 70 | | 30 | 30 | 50 | |
| | PCR (B-2) | | | 30 | | | 80 | | | | 40 |
| | Glass fiber (C) | | | | | | | | | | |
| | Glass fiber (C-1) | | 40 | | | 60 | | 35 | | 50 | 40 |
| | Glass fiber (C-2) | | | 130 | 30 | | 40 | | 100 | | |
| | Thermoplastic elastomer (G) | | | | | | | | | | |
| | Thermoplastic elastomer (G-1) | | 15 | | 15 | 20 | | 50 | 50 | | 20 |
| | Thermoplastic elastomer (G-2) | | | 30 | | | 20 | | | 30 | |
| | Compatibilizer (D) | | | | | | | | | | |
| | Silane coupling agent (D-1) | | | | | | | | | | |
| | Isocyanurate (D-2) | | | | | | | | | 1.0 | |
| | Epoxy resin (D-3) | | | | | | | | | | 5.0 |
| | Release agent (E) | | | | | | | | | | |
| | Release agent (E-1) | | | | | | 0.5 | | | 0.5 | |
| | (C×100)/(A+B) | | 31 | 100 | 25 | 35 | 22 | 27 | 77 | 33 | 29 |
| | (G×100)/(A+B) | | 12 | 23 | 13 | 12 | 11 | 38 | 38 | 20 | 14 |
| Evaluations | Cold and hot impact resistance | Cycles | 220 | 110 | 300 | 140 | 210 | 280 | 120 | 190 | 330 |
| | Bonding strength | MPa | 40 | 35 | 45 | 38 | 36 | 38 | 37 | 43 | 48 |
| | Wet heat resistance | % | 85 | 76 | 88 | 78 | 79 | 90 | 78 | 85 | 90 |
| | Molding flow length | mm | 200 | 130 | 130 | 170 | 170 | 150 | 140 | 160 | 160 |
| | Color | - | Light brown | Light brown | Light brown | Brown | Brown | Light brown | Light brown | Brown | Light brown |

### COMPARATIVE EXAMPLES 14 to 18 and REFERENCE EXAMPLE 3

Pellet-shaped resin compositions were prepared by the same method as in Example 21, with the blending proportions between the PPS (A), PCR polyamide (B) or polyamide (B'), glass fiber (C) and thermoplastic elastomer (G) set according to the conditions specified in Table 6. Then complexes were created, and their evaluation was performed, by the same method as in Example 21. The evaluation results are presented in Table 6.

The resin compositions obtained from Comparative Examples 14, 15, 17 and 18 were inferior in cold and hot impact resistance. The resin compositions obtained from Comparative Examples 14 to 18 were inferior in bondability with metal. The resin compositions obtained from Comparative Examples 16 and 18 were inferior in wet heat resistance. The resin compositions obtained from Comparative Examples 14 and 16 were inferior in color.

**[Table 6]**

| | | | Comparative Example | | | | | |
|---|---|---|---|---|---|---|---|---|
| | | Unit | 14 | 15 | 16 | 17 | 18 | Reference Example 3 |
| Formula | Polyarylene sulfide (A) | Parts by weight | | | | | | |
| | PPS (A-1) | | 100 | 100 | 100 | | | 100 |
| | PPS (A-4) | | | | | 100 | | |
| | PPS (A-5) | | | | | | 100 | |
| | PCR polyamide resin (B) | | | | | | | |
| | PCR (B-1) | | 30 | 30 | 100 | 30 | 30 | |
| | Polyamide resin (B') | | | | | | | 100 |
| | Glass fiber (C) | | | | | | | |
| | Glass fiber (C-1) | | 150 | 10 | 60 | 40 | 40 | 60 |
| | Thermoplastic elastomer (G) | | | | | | | |
| | Thermoplastic elastomer (G-1) | | 15 | 20 | 20 | 15 | 15 | 20 |
| | (C×100)/(A+B) | | 115 | 8 | 30 | 31 | 31 | 30 |
| | (G×100)/(A+B) | | 12 | 15 | 10 | 12 | 12 | 10 |
| Evaluations | Cold and hot impact resistance | Cycles MPa % mm - | 90 | 80 | 120 | 80 | 10 | 140 |
| | Bonding strength | | 28 | 27 | 25 | 25 | 22 | 24 |
| | Wet heat resistance | | 76 | 92 | 73 | 85 | 70 | 73 |
| | Molding flow length | | 80 | 260 | 90 | 80 | 340 | 110 |
| | Color | | Black | Brown | Deep green | Light brown | Brown | Brown |

The entire disclosures of Japanese Patent Application No. 2021-170620, Japanese Patent Application No. 2021-170621 and Japanese Patent Application No. 2021-170623, filed on October 19, 2021 including specifications, claims, drawings and summaries are incorporated herein by reference in their entireties.

### INDUSTRIAL APPLICABILITY

The PAS composition according to the present invention is one that contains a PCR polyamide without compromising the intrinsic heat resistance, chemical resistance, flowability and other characteristics of a PAS and is particularly useful in applications such as electric/electronic components and automotive components or applications such as wet-area applications, including piping/fittings.

### REFERENCE SYMBOLS

1; A gate point.
2; A through hole.
3; An insert block.
4; A weld-formation point.

## Claims

1. A polyarylene sulfide composition comprising a polyarylene sulfide (A) having a melt viscosity of 100 to 3000 poises as measured under conditions of a measuring temperature of 315°C and a load of 10 kg using a capillary rheometer flow tester fitted with a 1-mm diameter and 2-mm long die, 10 to 90 parts by weight of a post-consumer recycled polyamide (B) per 100 parts by weight of the polyarylene sulfide (A) and 20 to 110 parts by weight of a fibrous filler (C) per a total of 100 parts by weight of the polyarylene sulfide (A) and the post-consumer recycled polyamide (B).

2. The polyarylene sulfide composition according to Claim 1, wherein the polyarylene sulfide (A) is a recycled polyarylene sulfide.

3. The polyarylene sulfide composition according to Claim 1 or 2, wherein the post-consumer recycled polyamide (B) is a post-consumer recycled polyamide obtained by collecting and/or recycling at least one member selected from a fishing net, a rope, a carpet and a mat.

4. The polyarylene sulfide composition according to any one of Claims 1 to 3, further containing at least one compatibilizer (D) selected from an isocyanurate, an epoxy resin and a silane coupling agent and/or at least one release agent (E) selected from the group consisting of polyethylene wax, polypropylene wax and a fatty acid amide wax.

5. The polyarylene sulfide composition according to any one of Claims 1 to 4, further containing a nonfibrous filler (F).

6. The polyarylene sulfide composition according to any one of Claims 1 to 5, wherein the polyarylene sulfide (A) is a polyarylene sulfide having a melt viscosity of 100 to 2000 poises, the fibrous filler (C) is glass fiber, and the polyarylene sulfide composition further contains a thermoplastic elastomer (G).

7. A method for producing the polyarylene sulfide composition according to any one of Claims 1 to 6, the method comprising, with a twin-screw extruder having screws with a ratio (L/D) between screw length (L) and screw diameter (D) of 30 or greater and two or more kneading zones, melting and kneading at least the polyarylene sulfide (A), the post-consumer recycled polyamide (B) and the fibrous filler (C) under kneading conditions of a kneading-zone cylinder temperature of 280°C to 330°C, a screw peripheral speed of 50 mm/second to 400 mm/second and a dwell time of 30 seconds to 100 seconds and extruding resulting melt.

8. Pellets formed from the polyarylene sulfide composition according to any one of Claims 1 to 6, wherein the pellets have a columnar shape with a diameter of 0.5 to 2.5 mm and a length of 1.5 to 4 mm or a spherical shape with a diameter of 1 to 3 mm.

9. The pellets according to Claim 8, wherein the pellets have a light brown or brown color.

10. The pellets according to Claim 8 or 9, wherein the pellets are cold-cut pellets.
